# EUROPÄISCHE PATENTSCHRIFT

(11) **EP 2 271 063 B1**
(45) Veröffentlichungstag und Bekanntmachung des Hinweises auf die Patenterteilung: **21.11.2018**
(21) Anmeldenummer: 10011338.0
(22) Anmeldetag: 19.07.2006
(51) Int. Cl.: H04M 1/725, G01C 21/20

(54) **Verfahren und mobiles Endgerät zur ortsabhängigen Anwendungsbereitstellung**
Method and mobile terminal for location dependent provisioning of applications
Procédé et terminal mobile pour la mise à disposition des applications dépendant du lieu

(30) Priorität: 31.08.2005 DE 102005041517
(43) Veröffentlichungstag der Anmeldung: 05.01.2011
(62) Teilanmeldung aus: 06014991.1
(73) Patentinhaber: Vodafone Holding GmbH, 40213 Düsseldorf (DE)
(72) Erfinder: Rosenberger, Frank, 40668 Meerbusch (DE)
(74) Vertreter: Ring & Weisbrodt

(56) Entgegenhaltungen:
- WO-A-01/13069
- US-A1- 2004 048 620
- US-A1- 2004 203 909
- US-A1- 2004 266 409

## Beschreibung

Die vorliegende Erfindung betrifft gemäß Anspruch 1 ein Verfahren zum Betreiben eines in einem Mobilfunknetz nutzbaren, eine Anzeigeeinrichtung zur optischen und/oder akustischen Wiedergabe von Informationen und wenigstens eine Eingabeeinrichtung zur Erfassung von Informationen aufweisenden mobilen Endgerätes, wobei seitens der Anzeigeeinrichtung Nutzungs- und/oder Bedienmöglichkeiten endgeräteseitig zur Verfügung stehender Funktionen und/oder Anwendungen als Informationen wiedergegeben werden.

Ferner betrifft die vorliegende Erfindung gemäß Anspruch 14 ein mobiles Endgerät zur Nutzung in einem Mobilfunknetz, mit einer Anzeigeeinrichtung zur optischen und/oder akustischen Wiedergabe von Informationen und wenigstens einer Eingabeeinrichtung zur Erfassung von Informationen, wobei seitens der Anzeigeeinrichtung Nutzungs- und/oder Bedienmöglichkeiten endgeräteseitig zur Verfügung stehender Funktionen und/oder Anwendungen als Informationen wiedergebbar sind, welches zur Ausführung eines erfindungsgemäßen Verfahrens ausgebildet ist.

Derartige Verfahren und mobile Endgeräte sind im Stand der Technik bekannt und ermöglichen eine menügeführte Nutzung von entsprechend in Mobilfunknetzen und/oder seitens mobiler Endgeräte zur Verfügung stehender Funktionen und/oder Anwendungen, insbesondere zur Nutzung von seitens des Mobilfunknetzes bereitgestellten beziehungsweise verfügbaren Diensten für Kommunikationsverbindungen. Dabei ist die durch Wiedergabe von Nutzungs- und/oder Bedienmöglichkeiten von endgeräteseitig zur Verfügung stehender Funktionen und/oder Anwendungen gegebene Menüführung für entsprechende Funktionen und/oder Anwendungen mitunter derart umfangreich und schwer beziehungsweise umständlich nutzbar, dass nutzerseitig von einem Gebrauch entsprechender Funktionen und/oder Anwendungen abgesehen wird beziehungsweise ein solcher nur unzureichend und eingeschränkt erfolgt.

Darüber hinaus ist ein fortwährender Bedarf an nutzerindividualisierbaren Menüführungen gegeben, dem die bisher im Stand der Technik bekannten Wiedergaben von Nutzungs- und/oder Bedienmöglichkeiten endgeräteseitig zur Verfügung stehender Funktionen und/oder Anwendungen seitens einer Anzeigeeinrichtung eines mobilen Endgerätes nicht beziehungsweise nur beschränkt nachkommen.

Die US 2004/0048620 A1 offenbart ein mobiles Endgerät, das von einer sich zu Fuß von einem Punkt A hin zu einem Punkt B bewegenden Person mitgeführt werden kann, um sich die Wegstrecke, die Entfernung und die voraussichtlich benötigte Zeit zum Zurücklegen der Strecke berechnen und anzeigen zu lassen. Für die Berechnung ist die Kenntnis des derzeitigen Standorts der Person bzw. des mobilen Endgerätes erforderlich, weshalb das mobile Endgerät einen GPS-Empfänger besitzt, um Signale eines GPS-Satelliten empfangen zu können, aus denen die aktuelle Position bestimmt werden kann. Die Anzeige der Wegstrecke, der Entfernung, der Zeit und gegebenenfalls entlang der Wegstrecke liegende Sehenswürdigkeiten oder Einrichtungen setzt voraus, dass die Person über eine Eingabeeinrichtung des mobilen Endgerätes einen Bestimmungsort eingibt.

Die US 2004/0266409 A1 offenbart ein mobiles Endgerät, insbesondere ein Mobilfunktelefon, welches derart betrieben wird, dass die Erscheinungsform der Menüführung seitens seiner Anzeigeeinrichtung des mobilen Endgerätes in Abhängigkeit von dem geographischen Aufenthaltsort automatisch anpasst wird.

Die US 2004/0203909 A1 offenbart ein Verfahren zum Betreiben eines Mobilfunktelefons in einem Mobilfunknetz, wobei im Rahmen der Inanspruchnahme einer seitens des Mobilfunknetzes eingerichteten Anwendung zum Herunterladen von Informationen diese

Inanspruchnahme dabei in Abhängigkeit von dem geographischen Aufenthaltsort des Mobilfunktelefons erfolgt. Dadurch wird einem Nutzer eines Mobilfunktelefons, welcher sich beispielsweise in der Nähe eines Kinos befindet, ermöglicht, Informationen bezüglich seitens des Kinos laufender Filme zu erhalten.

Die WO 01/13069 A1 offenbart ein Verfahren zum Betreiben eines in einem Mobilfunknetz nutzbaren Mobilfunktelefons, bei welchem das Mobilfunktelefon Zugriff auf seitens eines zentralen Servers verwaltete Informationen aufenthaltsort- oder zeitabhängig erhalten soll. Die seitens des zentralen Servers verwalteten Informationen sind dabei insbesondere sogenannte Navigationsinformationen, um mit dem Mobilfunktelefon eine Navigationsanwendung realisieren zu können.

Der vorliegenden Erfindung liegt in Anbetracht dieses Standes der Technik die Aufgabe zugrunde, dem fortwährenden Bedarf an einfachen und nutzerindividualisierbaren Menüführungen für endgeräteseitig zur Verfügung stehender Funktionen und/oder Anwendungen von in Mobilfunknetzen nutzbaren mobilen Endgeräten nachkommen zu können.

Zur technischen Lösung dieser Aufgabe wird ein Verfahren zum Betreiben eines in einem Mobilfunknetz nutzbaren, eine Anzeigeeinrichtung zur optischen und/oder akustischen Wiedergabe von Informationen und wenigstens eine Eingabeeinrichtung zur Erfassung von Informationen aufweisenden mobilen Endgerätes, wobei seitens der Anzeigeeinrichtung Nutzungs- und/oder Bedienmöglichkeiten endgeräteseitig zur Verfügung stehender Funktionen und/oder Anwendungen als Informationen wiedergegeben werden, vorgeschlagen, wobei wenigstens eine Funktion und/oder Anwendung in Abhängigkeit von dem Aufenthaltsort des mobilen Endgerätes im Mobilfunknetz zur Verfügung gestellt wird, zumindest ein Teil der Nutzungs- und/oder Bedienmöglichkeiten der wenigstens einen zur

Verfügung stehenden Funktion und/oder Anwendung seitens der Anzeigeeinrichtung in Abhängigkeit von dem Aufenthaltsort des mobilen Endgerätes im Mobilfunknetz wiedergegeben wird, einem mobilen Endgerät in dem Mobilfunknetz für Kommunikationsverbindungen zur Verfügung stehende Dienste in Abhängigkeit des Aufenthaltsortes des mobilen Endgerätes im Mobilfunknetz gesteuert werden, wobei das Mobilfunknetz wenigstens ein Versorgungsgebiet mit einer aus Funkzellen aufgebauten zellularen Netzstruktur aufweist, das Versorgungsgebiet für wenigstens ein mobiles Endgerät in wenigstens ein Vorzugsgebiet und ein Restgebiet aufgeteilt wird und bei Aufenthalt des mobilen Endgerätes in dem wenigstens einen Vorzugsgebiet für Kommunikationsverbindungen eine Nutzung von wenigstens einem Dienst ermöglicht wird, welche von einer bei Aufenthalt des mobilen Endgerätes im Restgebiet für Kommunikationsverbindungen ermöglichten Nutzung von Diensten abweicht. Das Verfahren ist dadurch gekennzeichnet, dass der Aufenthaltsort in Form einer geographische Informationen des Aufenthaltsortes und/oder der Umgebung des Aufenthaltsortes aufweisenden Karte seitens der Anzeigeeinrichtung optisch wiedergegeben wird, wobei der Aufenthaltsort bei Aufenthalt in einem Vorzugsgebiet in der Karte in einer anderen graphischen Form und/oder einer anderen Farbe wiedergegeben wird als der Aufenthaltsort bei Aufenthalt in einem Restgebiet und die Wiedergabe der Nutzungs- und/oder Bedienmöglichkeiten zur Verfügung stehender Funktionen und/oder Anwendungen in Abhängigkeit des Bedarfs des Anwenders des mobilen Endgerätes seitens der Anzeigeeinrichtung wiedergegeben wird, wobei der Bedarf in Abhängigkeit von und/oder aus dem jeweiligen nutzerindividuellen Nutzungskontext prognostizierend durch Erfassung endgeräteseitig erfolgender Funktions- und/oder Anwendungsnutzungen bestimmt wird.

Der Erfindung liegt die Erkenntnis zugrunde, dass sich durch aufenthaltsortsabhängige Wiedergabe von Nutzungs- und/oder Bedienmöglichkeiten zur Verfügung stehender Funktionen und/oder Anwendungen seitens der Anzeigeeinrichtung des mobilen Endgerätes das Maß einfacher und nutzerindividualisierbarer Menüführungen für endgeräteseitig zur Verfügung stehender Funktionen und/oder Anwendungen steigern lässt. Durch die aufenthaltsortsabhängige Wiedergabe von Nutzungs- und/oder Bedienmöglichkeiten von endgeräteseitig zur Verfügung stehenden Funktionen und/oder Anwendungen wird dabei die Menüführung sowohl vereinfacht als auch durch den jeweiligen Aufenthaltsort des jeweiligen Nutzers individualisiert. Eine Vereinfachung der Menüführung ist dabei insbesondere aufgrund einer aufenthaltsortsabhängigen Wiedergabe der am jeweiligen Aufenthaltsort zur Verfügung stehenden Nutzungs- und/oder Bedienmöglichkeiten von zur Verfügung stehenden Funktionen und/der Anwendungen gegeben, die quasi eine Art Filterung der zur Verfügung stehenden Nutzungs- und/oder Bedienmöglichkeiten von zur Verfügung stehenden Funktionen und/der Anwendungen vornimmt.

Erfindungsgemäß wird wenigstens eine Funktion und/oder Anwendung in Abhängigkeit von dem Aufenthaltsort des mobilen Endgerätes im Mobilfunknetz zur Verfügung gestellt. Erfindungsgemäß werden so neben Nutzungs- und/oder Bedienmöglichkeiten von endgeräteseitig zur Verfügung stehenden Funktionen und/oder Anwendungen die Funktionen und/oder Anwendungen selbst aufenthaltsortsabhängig wiedergegeben. Dadurch ist das Maß der Nutzerindividualisierbarkeit und der Einfachheit von Menüführungen weiter steigerbar, insbesondere da am jeweiligen Aufenthaltsort nicht zur Verfügung stehende Funktionen und/oder Anwendungen im Rahmen einer Menüführung entsprechend nicht wiedergegeben beziehungsweise quasi rausgefiltert werden.

Der Aufenthaltsort des mobilen Endgerätes im Mobilfunknetz wird seitens der Anzeigeeinrichtung erfindungsgemäß optisch wiedergegeben. Dabei wird der Aufenthaltsort in Form einer geographische Informationen des Aufenthaltsortes und/oder der Umgebung beziehungsweise des Umfeldes des Aufenthaltsortes aufweisenden Karte wiedergegeben. Eine entsprechende erfindungsgemäße Wiedergabe der Nutzungs- und/oder Bedienmöglichkeiten von endgeräteseitig zur Verfügung stehenden Funktionen und/oder Anwendungen und/oder von endgeräteseitig zur Verfügung stehenden Funktionen und/oder Anwendungen selbst in Form einer geographischen Karte wird die entsprechende Nutzung beziehungsweise

Bedienung entsprechender Funktionen und/oder Anwendungen als auch deren Menüführung weiter vereinfacht, insbesondere da für den Nutzer eine intuitive Nutzung beziehungsweise Bedienung in Abhängigkeit des Aufenthaltsortes in graphischer Form bereitgestellt und ermöglicht wird. Eine besonders vorteilhafte Ausgestaltung der Erfindung sieht eine unmittelbare Wiedergabe der geographische Informationen des Aufenthaltsortes und/oder Umgebung des Aufenthaltsortes aufweisenden Karte mit und/oder nach Inbetriebnahme des mobilen Endgerätes vor, vorzugsweise ohne das weitere Aktivierungseingaben seitens des mobilen Endgerätes erforderlich sind. Erfindungsgemäß wird so unmittelbar nachdem das mobile Endgerät aktiviert, dass heißt in Betriebsbereitschaft versetzt wird, beispielsweise durch Betätigung einer Taste einer Eingabeeinrichtung des mobilen Endgerätes und/oder bei mobilen Endgeräten mit in der Regel zwei relativ zueinander durch Verschwenken, Verdrehen und/oder Verschieben zwischen zwei Positionen bewegbaren Gehäuseteilen des mobilen Endgerätes, wie sogenannten "Klapphandys", durch Verschwenken, Verdrehen und/oder Verschieben der beiden Gehäuseteile zubeziehungsweise gegeneinander, seitens der Anzeigeinrichtung des mobilen Endgerätes der Aufenthaltsort in Form einer geographische Informationen des Aufenthaltsortes und/oder der Umgebung des Aufenthaltsortes aufweisenden Karte wiedergegeben, ohne dass zusätzliche Betätigungs- beziehungsweise Aktivierungseingaben seitens des mobilen Endgerätes erforderlich sind.

In einer weiteren vorteilhaften Ausgestaltung der Erfindung ist die Größe hinsichtlich des Maßstabs und/oder die Informationsdichte hinsichtlich des Detailgrads der in Form einer Karte wiedergegebenen geographischen Informationen skalierbar. Dadurch ist die erfindungsgemäße Menüführung weiter individualisierbar und an die jeweiligen Bedürfnisse beziehungsweise Interessen des Nutzers anpassbar.

Gemäß einer weiteren vorteilhaften Ausgestaltung der Erfindung wird die Größe der in Form einer Karte wiedergegebenen geographischen Informationen von und/oder mit der jeweils aktuellen Funkzelle des Mobilfunknetzes vorgegeben, in der sich das mobile Endgerät aktuell befindet. Vorteilhafterweise ist so eine automatische und an die Größe der jeweiligen Funkzelle des Mobilfunknetzes am Aufenthaltsort des mobilen Endgerätes für die Skalierung der Größe hinsichtlich des Maßstabs und die Informationsdichte hinsichtlich des Detailgrads der in Form einer Karte wiedergegebenen geographischen Informationen realisierbar. In geographischen Bereichen, in denen zur Bereitstellung und/oder Sicherstellung einer Funkversorgung Funkzellen des Mobilfunknetzes einen kleineren geographischen Bereich abdecken, beispielsweise in Städten oder dergleichen Ballungsgebieten, sind entsprechend mehr Nutzungs- und/oder Bedienmöglichkeiten für zur Verfügung stehende Funktionen und/oder Anwendungen gegeben, als dies beispielsweise in ländlichen Gebieten und/oder dergleichen weniger stark besiedelten Gebieten der Fall ist und wo dementsprechend die von Funkzellen des Mobilfunknetzes abgedeckten geographischen Bereiche größer sind. Die Größe der jeweils aktuellen Funkzelle gibt insofern ein Maß für die wiederzugebende geographische Karte in Größe hinsichtlich des Maßstabs und/oder Informationsdichte hinsichtlich des Detailgrads derselben wieder.

Gemäß einer weiteren vorteilhaften Ausgestaltung der Erfindung wird eine Veränderung des Aufenthaltsortes des mobilen Endgerätes im Mobilfunknetz in der Karte nachgeführt, vorzugsweise derart, dass zumindest der aktuelle Aufenthaltsort in der Karte angezeigt wird. Erfindungsgemäß wird so zum einen eine Bewegung des mobilen Endgerätes und damit des Nutzers im Mobilfunknetz seitens der Karte nachvollziehbar und zum anderen zumindest der jeweils aktuelle Aufenthaltsort des mobilen Endgerätes beziehungsweise des Nutzers in der Karte angezeigt. Eine entsprechende erfindungsgemäße Funktionalität ist vorteilhafterweise bei einer Stadtführung oder dergleichen Anwendungen nutzbar, bei welchen anhand der Karte ein Startpunkt und bereits ablaufende Wege und/oder Ziele beziehungsweise Teilziele erkennbar und/oder anzeigbar sind. Erfindungsgemäß erfolgt vorteilhafterweise eine entsprechend dem jeweiligen Aufenthaltsort aktualisierte Wiedergabe der geographischen Karte. Gemäß einer weiteren vorteilhaften Ausgestaltung der Erfindung werden die in Form einer Karte wiedergegebenen geographischen Informationen einer . Veränderung des Aufenthaltsortes nachgeführt, vorzugsweise zumindest bei einer einen Funkzellenwechsel bedingenden Veränderung des Aufenthaltsortes des mobilen Endgerätes im Mobilfunknetz. Erfindungsgemäß ist dabei eine der Bewegung des mobilen Endgerätes nachgeführte Wiedergabe der geographischen Informationen der Karte seitens der Anzeigeeinrichtung vorgesehen.

Gemäß einer weiteren Ausgestaltung der Erfindung wird der Aufenthaltsort in der Karte zentralisiert wiedergegeben. Eine vorteilhafte Ausgestaltung der Erfindung sieht vor, dass der Aufenthaltsort in der Karte optisch unterscheidbar gegenüber sonstigen wiedergegebenen Informationen hervorgehoben wiedergegeben wird. Der seitens der Anzeigeeinrichtung des mobilen Endgerätes wiedergegebene Aufenthaltsort ist so in der Karte entweder stets an einer festen, vorzugsweise zentralisierten Position, oder sonst wie erkennbar hervorgehoben wiedergegeben, so dass für den Nutzer eine weitere Vereinfachung hinsichtlich der Nutzung beziehungsweise Bedienung bereitstellgestellt ist.

Eine weitere besonders vorteilhafte Ausgestaltung der Erfindung sieht vor, dass geographische Informationen einer Region, vorzugsweise des Versorgungsgebietes des Mobilfunknetzes, seitens einer Speichereinrichtung des mobilen Endgerätes erfasst sind und in Abhängigkeit des jeweiligen Aufenthaltsortes des mobilen Endgerätes im Mobilfunknetz die geographischen Informationen des Aufenthaltsortes und/oder der Umgebung des Aufenthaltsortes zur Wiedergabe der Karte aus der Speichereinrichtung geladen und wiedergegeben werden. Eine erfindungsgemäße Bevorratung der geographischen Informationen der Region seitens der Speichereinrichtung des mobilen Endgerätes reduziert vorteilhafterweise ansonsten über das Mobilfunknetz über Kommunikationsverbindungen auf das mobile Endgerät zu übertragende Informationen. Die Bevorratung von geographischen Informationen einer Region seitens des mobilen Endgerätes beziehungsweise einer Speichereinrichtung desselben ist insbesondere vorteilhaft für geographische Informationen, die sich nicht beziehungsweise nur selten ändern. Im Falle einer Änderung und/oder im Falle von sich ändernden geographischen Informationen können diese vorteilhafterweise über Kommunikationsverbindungen des Mobilfunknetzes auf das jeweilige mobile Endgerät übertragen werden. Zur Wiedergabe von geographischen Informationen des jeweiligen Aufenthaltsortes des mobilen Endgerätes im Mobilfunknetz brauchen so über das Mobilfunknetz vorteilhafterweise lediglich Informationen über den Aufenthaltsort des mobilen Endgerätes im Mobilfunknetz übertragen werden, welche seitens des mobilen Endgerätes dazu genutzt werden, entsprechende geographische Informationen aus der Speichereinrichtung des mobilen Endgerät zu laden und seitens der Anzeigeeinrichtung des mobilen Endgerätes wiederzugeben. Eine weitere vorteilhafte Ausgestaltung der Erfindung sieht vor, dass geographische Informationen einer Region, vorzugsweise des Versorgungsgebietes des Mobilfunknetzes, seitens einer Speichereinrichtung des Mobilfunknetzes erfasst sind und in Abhängigkeit des jeweiligen Aufenthaltsortes des mobilen Endgerätes die geographischen Informationen des Aufenthaltsortes und/oder der Umgebung des Aufenthaltsortes zur Wiedergabe der Karte über das Mobilfunknetz an das mobile Endgerät übertragen und wiedergegeben werden. Vorteilhafterweise wird eine entsprechende Übertragung und Wiedergabe für sich ändernde beziehungsweise häufig ändernde Informationen einer Region genutzt, insbesondere zur Wiedergabe der aktuellen Funkzelle in der Karte.

Gemäß einer weiteren besonders vorteilhaften Ausgestaltung der Erfindung wird seitens der Anzeigeeinrichtung als Funktion und/oder Anwendung eine Suchfunktionalität wiedergegeben und zur Verfügung gestellt, welche bei einer Nutzung der Suchfunktionalität automatisch den aktuellen Aufenthaltsort des mobilen Endgerätes im Mobilfunknetz mit in eine Suche aufnimmt. Vorteilhafterweise wird das Ergebnis einer entsprechenden Suche in Form geographischer Informationen wiedergegeben, vorzugsweise in graphischer Form, besonders bevorzugt in der seitens der Anzeigeeinrichtung wiedergegebenen geographischen Karte.

Eine weitere vorteilhafte Ausgestaltung der Erfindung sieht vor, dass einem mobilen Endgerät in dem Mobilfunknetz für Kommunikationsverbindung zur Verfügung stehende Dienste in Abhängigkeit des Aufenthaltsortes des mobilen Endgerätes im Mobilfunknetz gesteuert werden, wobei das Mobilfunknetz wenigstens ein Versorgungsgebiet mit einer aus Funkzellen aufgebauten zellularen Netzstruktur aufweist, das Versorgungsgebiet für wenigstens ein mobiles Endgerät in wenigstens ein Vorzugsgebiet und ein Restgebiet aufgeteilt wird. Erfindungsgemäß ist vorgesehen, dass bei Aufenthalt des mobilen Endgerätes in dem wenigstens einen Vorzugsgebiet für Kommunikationsverbindungen eine Nutzung von wenigstens einem Dienst ermöglicht wird, welche von einer bei Aufenthalt des mobilen Endgerätes im Restgebiet für Kommunikationsverbindungen ermöglichten Nutzung von Diensten abweicht, wobei der Aufenthaltsort bei Aufenthalt in einem Vorzugsgebiet in der Karte in einer anderen graphischen Form und/oder einer anderen Farbe wiedergegeben wird, als der Aufenthaltsort bei Aufenthalt in einem Restgebiet. Die Aufteilung des Versorgungsgebietes eines Mobilfunknetzes in wenigstens ein Vorzugsgebiet und ein Restgebiet für mobile Endgeräte mit unterschiedlichen Dienstnutzungen für Kommunikationsverbindungen für das mobile Endgerät im Vorzugsgebiet und im Restgebiet ist insbesondere für eine unterschiedliche Vergebührung von Kommunikationsverbindungen eines mobilen Endgerätes nutzbar, wobei im Vorzugsgebiet vorteilhafterweise eine günstigere Vergebührung von Kommunikationsverbindungen vorgesehen ist, als im Restgebiet. Erfindungsgemäß wird dem Nutzer dabei in der geographischen Karte der Aufenthalt in einem für ihn seitens des Mobilfunknetzes vorgesehenen beziehungsweise eingerichteten Vorzugsgebiets wiedergegeben, vorzugsweise durch entsprechende graphische Wiedergabe des Vorzugsgebiets seitens der geographischen Karte. Für Nutzer ist so eine weitere Vereinfachung hinsichtlich der Nutzung beziehungsweise Bedienung gegeben.

Eine weitere vorteilhafte Ausgestaltung der Erfindung sieht vor, dass neben und/oder zu geographischen Informationen des Aufenthaltsortes und/oder der Umgebung des Aufenthaltsortes zumindest teilweise Informationen über Gegebenheiten, einen Erwerb von Waren, eine Inanspruchnahme von Dienstleistungen und/oder zu seitens des mobilen Endgerätes erfassten Kommunikationspartnern wiedergegeben werden, vorzugsweise in einer symbolischen Form, die es ermöglicht, die Gegebenheiten, den Erwerb von Waren, die Art der Waren, die Inanspruchnahme von Dienstleistungen, die Art der Dienstleistungen, die Kommunikationspartner, die Art der Kommunikationspartner und/oder die Art, die Zeit und/oder den Umfang der Kommunikation mit den Kommunikationspartnern von den geographischen Informationen, dem wiedergegebenen Aufenthaltsort und von- beziehungsweise untereinander optisch unterscheiden zu können. Erfindungsgemäß werden so neben den geographischen Informationen in der Karte weitere Informationen über Gegebenheiten, beispielsweise Hotels, Restaurants, Museen, Kinos oder dergleichen Gegebenheiten, den Erwerb von Waren, die Inanspruchnahme von Dienstleistungen sowie Informationen über Kommunikationspartner des Nutzers des mobilen Endgerätes für eine weitergehende Nutzung wiedergegeben. Vorteilhafterweise sind Informationen über Gegebenheiten, ein Erwerb von Waren, eine Inanspruchnahme von Dienstleistungen und/oder zu seitens des mobilen Endgerätes erfassten Kommunikationspartnern seitens einer Speichereinrichtung des mobilen Endgerätes erfasst und werden in Abhängigkeit des jeweiligen Aufenthaltsortes des mobilen Endgerätes die Informationen zur Wiedergabe aus der Speichereinrichtung geladen und wiedergegeben. Eine weitere Ausgestaltung der Erfindung sieht vor, dass Informationen über Gegebenheiten, einen Erwerb von Waren, eine Inanspruchnahme von Dienstleistungen und/oder zu seitens des mobilen Endgerätes erfassten Kommunikationspartnern seitens einer Speichereinrichtung des mobilen Endgerätes erfasst sind und in Abhängigkeit des jeweiligen Aufenthaltsortes des mobilen Endgerätes die Informationen zur Wiedergabe über das Mobilfunknetz an das mobile Endgerät übertragen und wiedergegeben werden.

Eine besonders bevorzugte Ausgestaltung der Erfindung sieht vor, dass die Wiedergabe der Informationen über Gegebenheiten, einen Erwerb von Waren, eine Inanspruchnahme von Dienstleistungen und/oder zu seitens des mobilen Endgerätes erfassten Kommunikationspartnern zumindest teilweise in Form von Nutzungs- und/oder Bedienmöglichkeiten zur Verfügung stehender Funktionen und/oder Anwendungen erfolgt, wobei durch eine Auswahleingabe seitens einer Eingabeeinrichtung des mobilen Endgerätes eine weitergehende Nutzung ermöglicht wird, vorzugsweise unter Nutzung wenigstens einer Verlinkung zu einem seitens des Mobilfunknetzes betriebenen Dienstleistungsportals. So können auf einfache Art und Weise seitens der geographischen Karte wiedergegebene Informationen über Gegebenheiten, einen Erwerb von Waren, eine Inanspruchnahme von Dienstleistungen und/oder zu seitens des mobilen Endgerätes erfassten Kommunikationspartnern zur Verfügung stehende ergänzende Informationen durch einfache Auswahleingabe mit entsprechenden Wiedergaben seitens der Anzeigeinrichtung des mobilen Endgerätes näher spezifiziert werden. Vorteilhafterweise kann über eine entsprechende Verlinkung eine Inanspruchnahme von Dienstleistungen und/oder der Erwerb von Waren ausgeführt, zumindest jedoch eingeleitet werden. So sind beispielsweise aufenthaltsortabhängig für den Nutzer Informationen hinsichtlich Unterhaltungsmöglichkeiten wie Kino oder dergleichen Unterhaltungsmöglichkeiten abrufbar und über eine entsprechende Auswahleingabe beispielsweise Karten für eine entsprechende Vorstellung reservierbar und/oder bestellbar und/oder die Bezahlung über das Mobilfunknetz beziehungsweise das seitens des Mobilfunknetzes betriebenen Dienstleistungsportals bezahlbar.

Erfindungsgemäß wird die Wiedergabe der Nutzungs- und/oder Bedienmöglichkeiten zur Verfügung stehender Funktionen und/oder Anwendungen in Abhängigkeit des Bedarfs des Anwenders des mobilen Endgerätes seitens der Anzeigeeinrichtung wiedergegeben, wobei der Bedarf vorzugsweise in Abhängigkeit von und/oder aus dem jeweiligen nutzerindividuellen Nutzungskontext bestimmt wird, nämlich prognostizierend durch Erfassung endgeräteseitig erfolgender Funktions- und/oder Anwendungsnutzungen. Das mobile Endgerät ist dazu vorteilhafterweise in der Lage endgeräteseitig erfolgende Funktions- und/oder Anwendungsnutzungen des Nutzers zu erfassen und einander zuzuordnen, so dass das mobile Endgerät quasi selbstständig Vorlieben des Nutzers hinsichtlich der Nutzung beziehungsweise Bedienung des mobilen Endgerätes erfasst. Dadurch ist eine weitere Steigerung hinsichtlich des Maßes der Nutzerindividualisierbarkeit von Menüführungen erzielbar.

Gemäß einer weiteren vorteilhaften Ausgestaltung der Erfindung wird der Aufenthaltsort des mobilen Endgerätes im Mobilfunknetz unter Nutzung netzbasierter und/oder endgerätebasierter Lokalisierungstechnologien bestimmt, vorzugsweise anhand der Funkzelle des Mobilfunknetzes in der sich das mobile Endgerät befindet als netzbasierte Lokalisierungstechnologie und/oder mittels eines satellitengestützen Navigations- und/oder Ortungssystems, besonders bevorzugt mittels GPS (GPS: Global Positioning System), als endgerätebasierter Lokalisierungstechnologie. Durch die Kombination von netzbasierten Lokalisierungstechnologien, wie beispielsweise COO (COO: Cell Of Origin), TOA (TOA: Time Of Arrival) und dergleichen und/oder endgerätebasierten Lokalisierungstechnologien, wie beispielsweise E-OTD (E-OTD: Enhanced-Opserved Time Difference), GPS (Global Positioning System) oder dergleichen, ist eine verbesserte Bestimmung des Aufenthaltsortes des mobilen Endgerätes im Mobilfunknetz und damit eine Verbesserung hinsichtlich der Nutzerindividualisierbarkeit einer entsprechenden Wiedergabe von Nutzungs- und/oder Bedienmöglichkeiten erzielbar.

Zur Lösung der eingangs genannten Aufgabe wird mit der vorliegenden Erfindung ferner ein mobiles Endgerät zur Nutzung in einem Mobilfunknetz, vorzugsweise ein Mobilfunktelefon, mit einer Anzeigeeinrichtung zur optischen und/oder akustischen Wiedergabe von Informationen und wenigstens eine Eingabeeinrichtung zur Erfassung von Informationen, wobei seitens der Anzeigeeinrichtung Nutzungs- und/oder Bedienmöglichkeiten endgeräteseitig zur Verfügung stehender Funktionen und/oder Anwendungen als Informationen wiedergebbar sind, vorgeschlagen, welches zur Ausführung eines erfindungsgemäßen Verfahrens ausgebildet ist.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig.1: in einer schematisch perspektivischen Ansicht ein Ausführungsbeispiel eines erfindungsgemäßen mobilen Endgerätes zur Ausführung eines erfindungsgemäßen Verfahrens und
- Fig. 2: in einer schematischen Draufsicht das mobile Endgerät gemäß Fig. 1 mit einem Ausführungsbeispiel einer Nutzung eines erfindungsgemäßen Verfahrens.

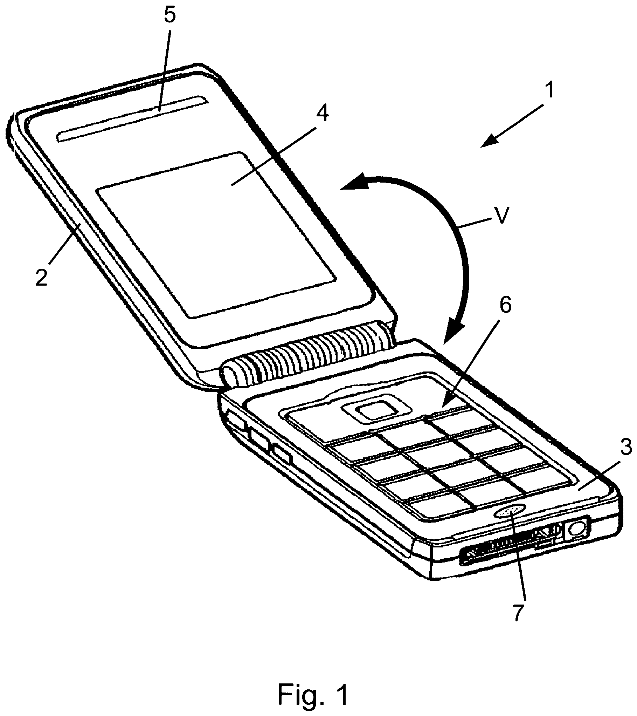

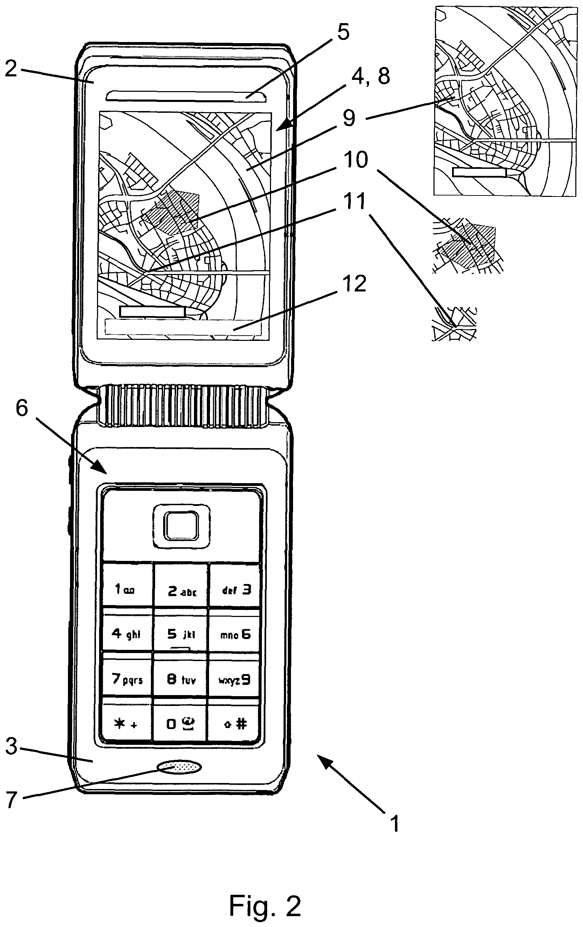

Fig. 1 und Fig. 2 zeigen ein in einem Mobilfunknetz gemäß dem GSM- und/oder UMTS- Funknetzstandard betreibbares mobiles Endgerät 1, vorliegend ein Mobilfunktelefon 1. Bei dem Mobilfunktelefon 1 handelt es sich um ein sogenanntes klappbares Mobilfunktelefon 1, welches ein aus zwei durch Verschwenken gegeneinander beziehungsweise umeinander relativ zueinander zuordbaren Gehäuseteilen 2 und 3 bestehendes Gehäuse aufweist. Die Verschwenkbarkeit der Gehäuseteile 2 und 3 gegeneinander beziehungsweise umeinander ist in Fig. 1 durch den mit V gekennzeichneten Doppelpfeil dargestellt.

Das Gehäuseteil 2 des Gehäuses des Mobilfunktelefons 1 weist auf der dem Gehäuseteil 3 im Rahmen der Verschwenkung V zugewandten Seite zur Wiedergabe von optischen Informationen ein Display 4 als Anzeigeeinrichtung 4 und zur Wiedergabe von akustischen Informationen ein Lautsprecher 5 beziehungsweise eine Hörmuschel 5 als Anzeigeeinrichtung 5 auf. Das Gehäuseteil 3 des Gehäuses des Mobilfunktelefons 1 weist auf der dem Gehäuseteil 2 im Rahmen der Verschwenkung V zugewandten Seite zur Erfassung von akustischen und/oder optischen Informationen eine mehrere Tasten umfassende Tastatur 6 als Eingabeeinrichtung 6 und zur Erfassung von akustischen Informationen in Form von akustischen Signalen ein Mikrofon 7 als Eingabeeinrichtung 7 auf.

Bei dem vorliegenden Mobilfunktelefon 1 sind durch Verschwenkung V der beiden Gehäuseteile 2 und 3 zueinander vorliegend zwei Funktionszustände des Mobilfunktelefons 1 einnehmbar. In dem in Fig. 1 und Fig. 2 dargestellten, als aufgeklappt zu bezeichnenden Funktionszustand des Mobilfunktelefons 1 sind das in dem Gehäuseteil 2 angeordnete Display 4 und der Lautsprecher 5 beziehungsweise die Hörmuschel 5 sowie die in dem Gehäuseteil 3 angeordnete Tastatur 6 und das Mikrofon 7 für den Nutzer des Mobilfunktelefons 1 zur Nutzung zugänglich. In einem hier nicht explizit dargestellten, als zugeklappt zu bezeichnenden Funktionszustand des Mobilfunktelefons 1 sind das in dem Gehäuseteil 2 angeordnete Display 4 und der Lautsprecher 5 beziehungsweise die Hörmuschel 5 sowie die in dem Gehäuseteil 3 angeordnete Tastatur 6 und das Mikrofon 7 für den Nutzer nicht zugänglich. Im zugeklappten Zustand befindet sich das Mobilfunktelefon 1 im sogenannten Standby-Modus (Bereitschaftsmodus), in welchem zumindest das Display 4 des Mobilfunktelefons 1 deaktiviert beziehungsweise in einem Bereitschaftsmodus (Standby-Modus) versetzt wird.

Fig. 2 zeigt ein erfindungsgemäßes Ausführungsbeispiel eines Funktionszustandes des Mobilfunktelefons 1 im aufgeklappten Zustand. Dabei wird das Mobilfunktelefon 1 vorliegend mit dem Aufklappen durch Verschwenken der Gehäuseteile 2 und 3 gegeneinander in Betrieb genommen. Unmittelbar mit und/oder nach entsprechender Inbetriebnahme des Mobilfunktelefons 1 wird in Abhängigkeit des Aufenthaltsortes des Mobilfunktelefons 1 im Mobilfunknetz der Aufenthaltsort 11 seitens des Displays 4 in Form einer geographische Informationen des Aufenthaltsortes 11 und/oder der Umgebung des Aufenthaltsortes 11 aufweisenden Karte 9 wiedergegeben. Die Wiedergabe der geographische Informationen des Aufenthaltsortes 11 und/oder der Umgebung des Aufenthaltsortes 11 aufweisenden Karte 9 erfolgt dabei ohne das weitere Aktivierungseingaben seitens der Eingabeeinrichtungen 6 und/oder 7 des Mobilfunktelefons 1 erforderlich wären, insbesondere ohne Betätigung einer Taste der Tastatur 6 oder eine Spracheingabe über das Mikrofon 7.

Wie anhand der in Fig. 2 rechts dargestellten Einzelelemente der seitens des Displays 4 wiedergegebenen Gesamtansicht 8 erkennbar, wird vorliegend der Aufenthaltsort 11 des Mobilfunktelefons 1 im Mobilfunknetz 1 in einer geographische Informationen aufweisenden Karte 9 wiedergegeben. Der Aufenthaltsort 11 wird dabei vorliegend als Punkt in einer gegenüber den graphischen Informationen der Karte 9 anderen Farbe dem Nutzer seitens des Displays 4 entsprechend signalisiert. Bei Bewegung des Nutzers und dementsprechend des Mobilfunktelefons 1 im Mobilfunknetz wird die aktuelle Position des Aufenthaltsortes des Mobilfunktelefons 1 entsprechend in der seitens des Displays 4 wiedergegebenen geographischen Karte nachgeführt. Dabei kann - je nach gewünschter Betriebsart - die geographische Karte 9 kontinuierlich und/oder mit Verlassen des aktuellen Aufenthaltspunktes aus dem in der jeweiligen Gesamtansicht 8 jeweils angezeigten geographischen Karte 9 nachgeführt werden.

Bei dem in Fig. 2 dargestellten Ausführungsbeispiel ist das Versorgungsgebiet des Mobilfunknetzes für das Mobilfunktelefon 1 in ein Vorzugsgebiet 10 und ein außerhalb des Vorzugsgebietes 10 liegendes Restgebiet aufgeteilt. Bei Aufenthalt des Mobilfunktelefons 1 in dem Vorzugsgebiet 10 stehen dem Nutzer des Mobilfunktelefons 1 dabei Dienstnutzungen für Kommunikationsverbindungen zur Verfügung, welche von Dienstnutzungen für Kommunikationsverbindungen des Mobilfunktelefons 1 im Restgebiet abweichen. Vorliegend ist dabei im Vorzugsgebiet 10 insbesondere eine kostengünstigere Vergebührung von Kommunikationsverbindungen im Mobilfunknetz gegeben. Sowohl das Vorzugsgebiet 10 als auch der Aufenthalt des Mobilfunktelefons 1 mit einem Aufenthaltsort 11 im Vorzugsgebiet 10 werden vorliegend seitens der Gesamtansicht 8 in dem Display 4 des Mobilfunktelefons 1 wiedergegeben, zumindest wenn seitens des Displays 4 ein entsprechender Ausschnitt der geographischen Karte 9 wiedergegeben wird.

Wie anhand des Displays 4 gemäß Fig. 2 zu erkennen ist, ist im unteren Bereich der Gesamtansicht 8 vorliegend ein Anzeigebereich 12 eine Suchfunktionalität gegeben, welche bei einer Nutzung der Suchfunktionalität automatisch den aktuellen Aufenthaltsort 11 des Mobilfunktelefons 1 im Mobilfunknetz mit in eine Suche aufnimmt. Dabei wird vorteilhafterweise das Ergebnis einer Suche in Form geographischer Informationen seitens des Displays 4 graphisch wiedergegeben.

Seitens des Displays 4 werden vorliegend in Abhängigkeit des Aufenthaltsortes 11 des Mobilfunktelefons 1 im Mobilfunknetz dem Nutzer des Mobilfunktelefons 1 am jeweiligen Aufenthaltsort 11 beziehungsweise dessen geographischer Umgebung Nutzung- und/oder Bedienmöglichkeiten für endgeräteseitig zur Verfügung stehender Funktionen und/oder Anwendungen wiedergegeben, welche die Menüführung von beziehungsweise durch Funktionen und/oder Anwendungen des Mobilfunktelefons 1 vereinfacht und nutzerindividualisiert. Bei dem in Fig. 2 dargestellten Ausführungsbeispiel werden dem Nutzer des Mobilfunktelefons 1 beispielsweise neben seinem Vorzugsgebiet 10 in der Nähe seines Aufenthaltsortes befindliche Restaurants oder dergleichen Gegebenheiten in symbolischer Form graphisch wiedergegeben.

Die in den Fig. der Zeichnung dargestellten Ausführungsbeispiele der Erfindung dienen lediglich der Erläuterung der Erfindung und sind für diese nicht beschränkend.

### Bezugszeichenliste:

- 1: mobiles Endgerät/Mobilfunktelefon
- 2: Gehäuseteil (mobiles Endgerät (1))
- 3: Gehäuseteil (mobiles Endgerät (1))
- 4: Anzeigeeinrichtung/Display (Gehäuseteil (2))
- 5: Lautsprecher/Hörmuschel (Gehäuseteil (2))
- 6: Eingabeeinrichtung/Tastatur (Gehäuseteil (3))
- 7: Mikrofon (Gehäuseteil (3))
- 8: Gesamtansicht (Anzeigeeinrichtung (4))
- 9: geographische Karte (Gesamtansicht (9))
- 10: Vorzugsgebiet (Gesamtansicht (9))
- 11: Aufenthaltsort (Gesamtansicht (9))
- 12: Anzeigebereich Suchfunktionalität (Gesamtansicht (9))
- V: Verschwenkung

## Patentansprüche

1. Verfahren zum Betreiben eines in einem Mobilfunknetz nutzbaren, eine Anzeigeeinrichtung (4, 5) zur optischen und/oder akustischen Wiedergabe von Informationen und wenigstens eine Eingabeeinrichtung (6, 7) zur Erfassung von Informationen aufweisenden mobilen Endgerätes (1), wobei seitens der Anzeigeeinrichtung (4, 5) Nutzungs- und/oder Bedienmöglichkeiten endgeräteseitig zur Verfügung stehender Funktionen und/oder Anwendungen als Informationen wiedergegeben werden,
dabei wird
wenigstens eine Funktion und/oder Anwendung in Abhängigkeit von dem Aufenthaltsort (11) des mobilen Endgerätes (1) im Mobilfunknetz zur Verfügung gestellt
und wird zumindest ein Teil der Nutzungs- und/oder Bedienmöglichkeiten der wenigstens einen zur Verfügung stehenden Funktion und/oder Anwendung seitens der Anzeigeeinrichtung (4) in Abhängigkeit von dem Aufenthaltsort (11) des mobilen Endgerätes (1) im Mobilfunknetz wiedergegeben, dabei werden einem mobilen Endgerät (1) in dem Mobilfunknetz für Kommunikationsverbindungen zur Verfügung stehende Dienste in Abhängigkeit des Aufenthaltsortes (11) des mobilen Endgerätes (1) im Mobilfunknetz gesteuert, wobei das Mobilfunknetz wenigstens ein Versorgungsgebiet mit einer aus Funkzellen aufgebauten zellularen Netzstruktur aufweist, das Versorgungsgebiet für wenigstens ein mobiles Endgerät (1) in wenigstens ein Vorzugsgebiet (10) und ein Restgebiet aufgeteilt wird und bei Aufenthalt des mobilen Endgerätes (1) in dem wenigstens einen Vorzugsgebiet (10) für Kommunikationsverbindungen eine Nutzung von wenigstens einem Dienst ermöglicht wird, welche von einer bei Aufenthalt des mobilen Endgerätes (1) im Restgebiet für Kommunikationsverbindungen ermöglichten Nutzung von Diensten abweicht,
**dadurch gekennzeichnet, dass**
der Aufenthaltsort (11) in Form einer geographische Informationen des Aufenthaltsortes (11) und/oder der Umgebung des Aufenthaltsortes (11) aufweisenden Karte (9) seitens der Anzeigeeinrichtung (4) optisch wiedergegeben wird,
wobei der Aufenthaltsort (11) bei Aufenthalt in einem Vorzugsgebiet (10) in der Karte in einer anderen graphischen Form und/oder einer anderen Farbe wiedergegeben wird als der Aufenthaltsort (11) bei Aufenthalt in einem Restgebiet und
die Wiedergabe der Nutzungs- und/oder Bedienmöglichkeiten zur Verfügung stehender Funktionen und/oder Anwendungen in Abhängigkeit des Bedarfs des Anwenders des mobilen Endgerätes (1) seitens der Anzeigeeinrichtung (2, 3) wiedergegeben wird, wobei der Bedarf in Abhängigkeit von und/oder aus dem jeweiligen nutzerindividuellen Nutzungskontext, prognostizierend durch Erfassung endgeräteseitig erfolgender Funktions- und/oder Anwendungsnutzungen bestimmt wird.

2. Verfahren nach Anspruch 1, **gekennzeichnet durch** eine unmittelbare Wiedergabe der geographische Informationen des Aufenthaltsortes (11) und/oder der Umgebung des Aufenthaltsortes (11) aufweisenden Karte (9) mit und/oder nach Inbetriebnahme des mobilen Endgerätes (1), ohne weitere Aktivierungseingabe seitens des mobilen Endgerätes (1).

3. Verfahren nach Anspruch 1 oder Anspruch 2, **dadurch gekennzeichnet, dass** eine Veränderung des Aufenthaltsortes (11) in der Karte (9) nachgeführt wird, derart das zumindest der aktuelle Aufenthaltsort (11) in der Karte (9) angezeigt wird.

4. Verfahren nach einem der Ansprüche 1 bis 3, **dadurch gekennzeichnet, dass** die in Form einer Karte (9) wiedergegebenen geographischen Informationen zumindest bei einer einen Funkzellenwechsel bedingenden Veränderung des Aufenthaltsortes (11) nachgeführt werden.

5. Verfahren nach einem der Ansprüche 1 bis 4, **dadurch gekennzeichnet, dass** geographische Informationen einer Region seitens einer Speichereinrichtung des mobilen Endgerätes (1) erfasst sind und in Abhängigkeit des jeweiligen Aufenthaltsortes (11) des mobilen Endgerätes (1) die geographischen Informationen des Aufenthaltsortes (11) und/oder der Umgebung des Aufenthaltsortes (11) zur Wiedergabe der Karte (9) aus der Speichereinrichtung geladen und wiedergegeben werden und/oder dass geographische Informationen einer Region seitens einer Speichereinrichtung des Mobilfunknetzes erfasst sind und in Abhängigkeit des jeweiligen Aufenthaltsortes (11) des mobilen Endgerätes (1) die geographischen Informationen des Aufenthaltsortes (11) und/oder der Umgebung des Aufenthaltsortes (11) zur Wiedergabe der Karte (9) über das Mobilfunknetz an das mobile Endgerät (1) übertragen und wiedergegeben werden.

6. Verfahren nach Anspruch 5, **dadurch gekennzeichnet, dass** die geographischen Informationen einer Region geographische Informationen des Versorgungsgebietes des Mobilfunknetzes sind.

7. Verfahren nach einem der Ansprüche 1 bis 6, **dadurch gekennzeichnet, dass** seitens der Anzeigeeinrichtung (2) als Funktion und/oder Anwendung eine Suchfunktionalität (12) wiedergegeben und zur Verfügung gestellt wird, welche bei einer Nutzung der Suchfunktionalität (12) automatisch den aktuellen Aufenthaltsort (11) des mobilen Endgerätes (1) im Mobilfunknetz mit in eine Suche aufnimmt.

8. Verfahren nach einem der Ansprüche 1 bis 7, **dadurch gekennzeichnet, dass** neben und/oder zu geographischen Informationen des Aufenthaltsortes (11) und/oder der Umgebung des Aufenthaltsortes (11) zumindest teilweise Informationen über Gegebenheiten, einen Erwerb von Waren, eine Inanspruchnahme von Dienstleistungen und/oder zu seitens des mobilen Endgerätes (1) erfassten Kommunikationspartnern in einer symbolischen Form wiedergegeben werden, die es ermöglicht, die Gegebenheiten, den Erwerb von Waren, die Art der Waren, die Inanspruchnahme von Dienstleistungen, die Art der Dienstleistungen, die Kommunikationspartner, die Art der Kommunikationspartner und/oder die Art, die Zeit und/oder den Umfang der Kommunikation mit den Kommunikationspartnern von den geographischen Informationen, und dem wiedergegebenen Aufenthaltsort (11) von- beziehungsweise untereinander optisch unterscheiden zu können.

9. Verfahren nach Anspruch 8, **dadurch gekennzeichnet, dass** Informationen über Gegebenheiten, einen Erwerb von Waren, eine Inanspruchnahme von Dienstleistungen und/oder zu seitens des mobilen Endgerätes (1) erfassten Kommunikationspartnern seitens einer Speichereinrichtung des mobilen Endgerätes (1) erfasst sind und in Abhängigkeit des jeweiligen Aufenthaltsortes (11) des mobilen Endgerätes (1) die Informationen zur Wiedergabe aus der Speichereinrichtung geladen und wiedergegeben werden und/oder dass Informationen über Gegebenheiten, einen Erwerb von Waren, eine Inanspruchnahme von Dienstleistungen und/oder zu seitens des mobilen Endgerätes (1) erfassten Kommunikationspartnern seitens einer Speichereinrichtung des Mobilfunknetzes erfasst sind und in Abhängigkeit des jeweiligen Aufenthaltsortes (11) des mobilen Endgerätes (1) die Informationen zur Wiedergabe über das Mobilfunknetz an das mobile Endgerät (1) übertragen und wiedergegeben werden.

10. Verfahren nach Anspruch 8 oder Anspruch 9, **dadurch gekennzeichnet, dass** die Wiedergabe der Informationen über Gegebenheiten, einen Erwerb von Waren, eine Inanspruchnahme von Dienstleistungen und/oder zu seitens des mobilen Endgerätes (1) erfassten Kommunikationspartnern zumindest teilweise in Form von Nutzungs- und/oder Bedienmöglichkeiten zur Verfügung stehender Funktionen und/oder Anwendungen erfolgt, wobei durch eine Auswahleingabe seitens einer Eingabeeinrichtung des mobilen Endgerätes (1) eine weitergehende Nutzung ermöglicht wird.

11. Verfahren nach Anspruch 10, **dadurch gekennzeichnet, dass** die weitergehende Nutzung unter Nutzung wenigstens einer Verlinkung zu einem seitens des Mobilfunknetzes betriebenen Dienstleistungsportals ermöglicht wird.

12. Verfahren nach einem der Ansprüche 1 bis 11, **dadurch gekennzeichnet, dass** der Aufenthaltsort (11) des mobilen Endgerätes (1) im Mobilfunknetz unter Nutzung netzbasierter und/oder endgerätebasierter Lokalisierungstechnologien bestimmt wird.

13. Verfahren nach Anspruch 12, **dadurch gekennzeichnet, dass** der Aufenthaltsort (11) des mobilen Endgerätes (1) im Mobilfunknetz anhand der Funkzelle des Mobilfunknetzes, in der sich das mobile Endgerät (1) befindet, als netzbasierte Lokalisierungstechnologie und/oder mittels eines satellitengestützten Navigations- und/oder Ortungssystems bestimmt wird.

14. Mobiles Endgerät (1) zur Nutzung in einem Mobilfunknetz, mit einer Anzeigeeinrichtung (4, 5) zur optischen und/oder akustischen Wiedergabe von Informationen und wenigstens einer Eingabeeinrichtung (6, 7) zur Erfassung von Informationen, wobei seitens der Anzeigeeinrichtung (4) Nutzungs- und/oder Bedienmöglichkeiten endgeräteseitig zur Verfügung stehender Funktionen und/oder Anwendungen als Informationen wiedergebbar sind, **dadurch gekennzeichnet, dass** dieses zur Ausführung eines Verfahrens nach einem der Ansprüche 1 bis 13 ausgebildet ist.

## Claims

1. A method for operating a mobile terminal that can be used in a mobile radio network and that comprises a display device (4, 5) for the optical and/or acoustic reproduction of information and at least one input device (6, 7) for gathering information, wherein utilisation and/or operation possibilities of functions and/or applications that are available on the terminal will be reproduced as information by means of the display device (4, 5),
wherein
at least one function and/or application will be made available in dependence on the local position (11) of the mobile terminal (1) in the mobile radio network and at least a part of the utilisation and/or operation possibilities of the at least one available function and/or application will be reproduced by the display device (4) in dependence on the local position (11) of the mobile terminal (1) in the mobile radio network,
wherein
services which are available to a mobile terminal (1) in the mobile radio network for communication connections will be controlled in dependence on the local position (11) of the mobile terminal (1) in the mobile radio network, wherein the mobile radio network at least comprises one service area having a cellular network structure composed of radio cells, the service area for at least one mobile terminal (1) is divided into one preferred area (10) and a residual area and if the mobile terminal (1) stays in the at least one preferred area (10) a utilisation of at least one service will be made possible for communication connections, which utilisation differs from a utilisation of services made possible for communication connections if the mobile terminal (1) stays in the residual area,
**characterized in that**
the local position (11) will be optically reproduced by means of the display device (4) in form of a map (9) comprising geographic information of the local position (11) and/or the surroundings of the local position (11),
wherein in case of a stay in a preferred area the local position (11) will be reproduced in the map in a different geographic form and/or in a different colour than the local position (11) in case of a stay in a residual area and
the reproduction of the utilisation and/or operation possibilities of available functions and/or applications will be realized by means of the display device (2, 3) in dependence on the requirements of the user of the mobile terminal (1), wherein the requirements will be determined in dependence on and/or on the base of the respective user individual utilisation context in a prognosticating manner by collecting utilizations of functions and/or applications realized by means of the terminal.

2. A method according to claim 1, **characterized by** a direct reproduction of the map (9) comprising geographic information of the local position (11) and/or the environment of the local position (11) upon and/or after putting the mobile terminal (1) into operation without other activation input by means of the mobile terminal (1).

3. A method according to claim 1 or claim 2, **characterized in that** a change of the local position (11) will be tracked in the map (9), such that at least the current local position (11) will be indicated in the map (9).

4. A method according to one of the claims 1 to 3, **characterized in that** the geographic information reproduced in form of a map (9) will be tracked at least upon a change of the local position (11) that causes a radio cell change.

5. A method according to one of the claims 1 to 4, **characterized in that** geographic information of a region are recorded by a storage device of the mobile terminal (1) and in dependence on the respective local position (11) of the mobile terminal (1) the geographic information of the local position (11) and/or the surroundings of the local position (11) will be loaded from the storage device and reproduced for reproducing the map (9) and/or that geographic information of a region are recorded by a storage device of the mobile radio network and in dependence on the respective local position (11) of the mobile terminal (1) the geographic information of the local position (11) and/or the surroundings of the local position (11) will be transmitted via the mobile radio network to the mobile terminal (1) and reproduced for reproducing the map (9).

6. A method according to claim 5, **characterized in that** the geographic information of a region is a geographic information of the service area of the mobile radio network.

7. A method according to one of the claims 1 to 6, **characterized in that** the display device (2) reproduces and makes a searching functionality (12) available as a function and/or an application, which searching functionality will, if used, automatically include the current local position (11) of the mobile terminal (1) in the mobile radio network in a search.

8. A method according to one of the claims 1 to 7, **characterized in that** apart from and/or in addition to geographic information of the local position (11) and/or the surroundings of the local position (11). information about local conditions, a purchase of goods, a utilisation of services and/or communication partners recorded by the mobile terminal (1) will be at least partially reproduced in a symbolic form which enables to optically distinguish the local conditions, the purchase of goods, the kind of the goods, the utilisation of services, the kind of the services, the communication partners, the kind of the communication partners and/or the type, the time and/or the extend of the communication with the communication partners from the geographic information and the reproduced local position (11) or with respect to each other.

9. A method according to claim 8, **characterized in that** information about local conditions, a purchase of goods, a utilisation of services and/or communication partners recorded by the mobile terminal (1) are recorded by a storage device of the mobile terminal (1) and in dependence on the respective local position (11) of the mobile terminal (1) the information will be loaded from the storage device for reproduction and be reproduced and/or that information about local conditions, a purchase of goods, a utilisation of services and/or communication partners recorded by the mobile terminal (1) are recorded by a storage device of the mobile radio network and in dependence on the respective local position (11) of the mobile terminal (1) the information will be transmitted via the mobile radio network to the mobile terminal (1) for reproduction and be reproduced.

10. A method according to claim 8 or claim 9, **characterized in that** the reproduction of the information about local conditions, a purchase of goods, a utilisation of services and/or communication partners recorded by the mobile terminal (1) will be at least partially realized in form of utilisation and/or operation possibilities of available functions and/or applications, wherein a selection input by means of the input device of the mobile terminal (1) will enable a further utilisation.

11. A method according to claim 10, **characterized in that** the further utilisation will be enabled using at least one link to a portfolio of services operated by the mobile radio network.

12. A method according to one of the claims 1 to 11, **characterized in that** the local position (11) of the mobile terminal (1) in the mobile radio network will be determined using network-based and/or terminal-based localisation technologies.

13. A method according to claim 12, **characterized in that** the local position (11) of the mobile terminal (1) in the mobile radio network will be determined by means of the radio cell of the mobile radio network, in which the mobile terminal (1) is located, as network-based localisation technology and/or by means of a satellite-based navigation and/or localisation system.

14. A mobile terminal (1) for the use in a mobile radio network, comprising a display device (4, 5) for the optical and/or acoustic reproduction of information and at least one input device (6, 7) for gathering information, wherein utilisation and/or operation possibilities of functions and/or applications that are available on the terminal can be reproduced as information by means of the display device (4), **characterized in that** the mobile terminal is configured for carrying out a method according to one of the claims 1 to 13.

## Revendications

1. Procédé de fonctionnement d'un terminal mobile (1) utilisable dans un réseau radio mobile et comprenant un dispositif d'affichage (4, 5) pour la reproduction optique et/ou acoustique d'informations et au moins un dispositif d'entrée (6, 7) pour saisir des informations, le dispositif d'affichage (4, 5) reproduisant des possibilités d'utilisation et/ou d'actionnement de fonctions et/ou d'applications, qui sont disponibles sur le terminal, comme des informations,
dans lequel
au moins une fonction et/ou application est rendue disponible en fonction de la position locale (11) du terminal mobile (1) dans le réseau radio mobile et au moins une partie des possibilités d'utilisation et/ou d'actionnement de l'au moins une fonction et/ou application disponible est reproduite par le dispositif d'affichage (4) en fonction de la position locale (11) du terminal mobile (1) dans le réseau radio mobile,
dans lequel
des services, qui sont à la disposition du terminal mobile (1) dans le réseau radio mobile pour des liaisons de communication, sont commandés en fonction de la position locale (11) du terminal mobile (1) dans le réseau radio mobile,
le réseau radio mobile comprenant au moins une zone de service ayant une structure de réseau cellulaire composée de cellules radio, la zone de service pour au moins un terminal mobile (1) étant divisée en au moins une zone de préférence (10) et une zone résiduelle et dans le cas d'un séjour d'un terminal mobile (1) dans l'au moins une zone de préférence (10) une utilisation d'au moins un service sera rendue possible pour des liaisons de communication, laquelle utilisation diffère d'une utilisation de services rendue possible pour des liaisons de communication dans le cas d'un séjour du terminal mobile (1) dans la zone résiduelle,
**caractérisé en ce que**
la position locale (11) sera reproduite de manière optique par le dispositif d'affichage (4) en forme d'une carte (9) comprenant des informations géographiques de la position locale (11) et/ou de l'environnement de la position locale (11),
dans le cas d'un séjour dans une zone de préférence (10), la position locale (11) sera reproduite dans la carte sous une forme graphique différente et/ou dans une couleur différente de celle de la position locale (11) dans le cas d'un séjour dans une zone résiduelle et
les possibilités d'utilisation et/ou d'actionnement de fonctions et/ou d'applications disponibles seront reproduites par moyen du dispositif d'affichage (2, 3) en fonction des besoins de l'utilisateur du terminal mobile (1), les besoins étant déterminés de manière prévoyante en fonction ou à partir du contexte d'utilisation respectif et individuel à l'utilisateur en saisissant des utilisations de fonctions et/ou d'applications réalisées par le terminal.

2. Procédé selon la revendication 1, **caractérisé par** une reproduction directe de la carte (9) comprenant des informations géographiques de la position locale (11) et/ou de l'environnement de la position locale (11) avec et/ou après la mise en service du terminal mobile (1) sans aucune autre entrée d'activation par moyen du terminal mobile (1).

3. Procédé selon la revendication 1 ou la revendication 2, **caractérisé en ce qu'**un changement de la position locale (11) sera tracé dans la carte (9), de sorte qu'au moins la position locale (11) actuelle sera indiquée dans la carte (9).

4. Procédé selon l'une des revendications 1 à 3, **caractérisé en ce que** les informations géographiques reproduites sous forme d'une carte (9) seront tracées au moins dans le cas d'un changement de la position locale (11), qui mène à un changement de cellule radio.

5. Procédé selon l'une des revendications 1 à 4, **caractérisé en ce que** des informations géographiques d'une région sont saisies par un dispositif de stockage du terminal mobile (1) et en fonction de la position locale (11) respective du terminal mobile (1) les informations géographiques de la position locale (11) et/ou de l'environnement de la position locale (11) sont chargées à partir du dispositif de stockage et reproduites pour la reproduction de la carte (9) et/ou que des informations géographiques d'une région sont saisies par un dispositif de stockage du réseau radio mobile et en fonction de la position locale (11) respective du terminal mobile (1) les informations géographiques de la position locale (11) et/ou de l'environnement de la position locale (11) sont transmises via le réseau radio mobile au terminal mobile (1) et reproduites pour la reproduction de la carte (9).

6. Procédé selon la revendication 5, **caractérisé en ce que** les informations géographiques d'une région sont des informations géographiques de la zone de service du réseau radio mobile.

7. Procédé selon l'une des revendications 1 à 6, **caractérisé en ce que** le dispositif d'affichage (2) reproduit et rend une fonction de recherche (12) disponible comme une fonction et/ou une application, laquelle fonction de recherche joindra automatiquement, lors de son utilisation, la position locale actuelle (11) du terminal mobile (1) dans le réseau radio mobile à une recherche.

8. Procédé selon l'une des revendications 1 à 6, **caractérisé en ce que** outre et/ou supplémentairement à des informations géographiques de la position locale (11) et/ou de l'environnement de la position locale (11), des informations sur des conditions locales, une acquisition de biens, une utilisation de services et/ou des partenaires de communication saisis par le terminal mobile (1) seront au moins partiellement reproduites sous une forme symbolique, qui permet de distinguer de manière optique les conditions locales, l'acquisition de biens, la nature des biens, l'utilisation de services, la nature des services, les partenaires de communication, la sorte des partenaires de communication et/ou la nature, le temps et/ou l'étendue de la communication avec les partenaires de communication des informations géographiques et de la position locale (11) reproduite ou les unes par rapport aux autres.

9. Procédé selon la revendication 8, **caractérisé en ce que** des informations sur des conditions locales, une acquisition de biens, une utilisation de services et/ou des partenaires de communication saisis par le terminal mobile (1) sont saisies par un dispositif de stockage du terminal mobile (1) et en fonction de la position locale (11) respective du terminal mobile (1) les informations sont chargées à partir du dispositif de stockage pour la reproduction et sont reproduites et/ou que des informations sur des conditions locales, une acquisition de biens, une utilisation de services et/ou des partenaires de communication saisis par le terminal mobile (1) sont saisies par un dispositif de stockage du réseau radio mobile et en fonction de la position locale (11) respective du terminal mobile (1) les informations sont transmises via le réseau radio mobile au terminal mobile (1) pour la reproduction et sont reproduites.

10. Procédé selon la revendication 8 ou la revendication 9, **caractérisé en ce que** la reproduction des informations sur des conditions locales, une acquisition de biens, une utilisation de services et/ou des partenaires de communication saisis par le terminal mobile (1) sera réalisée sous forme de possibilités d'utilisation et/ou d'actionnement de fonctions et/ou d'applications disponibles, une autre utilisation étant rendue possible par moyen d'une entrée de sélection par un dispositif d'entrée du terminal mobile (1).

11. Procédé selon la revendication 10, **caractérisé en ce que** l'autre utilisation sera rendue possible en utilisant au moins un lien à un portail de prestations de service opéré par le réseau radio mobile.

12. Procédé selon l'une des revendications 1 à 11, **caractérisé en ce que** la position locale (11) du terminal mobile (1) dans le réseau radio mobile est déterminée en utilisant des technologies de localisation basées sur le réseau et/ou sur le terminal.

13. Procédé selon la revendication 12, **caractérisé en ce que** la position locale (11) du terminal mobile (1) dans le réseau radio mobile est déterminée à l'aide de la cellule radio du réseau radio mobile, dans laquelle se trouve le terminal mobile (1), en tant que technologie de localisation basée sur le réseau et/ou par moyen d'un système de navigation et/ou de localisation par satellite.

14. Terminal mobile (1) destiné à l'utilisation dans un réseau radio mobile, comprenant un dispositif d'affichage (4, 5) pour la reproduction optique et/ou acoustique d'informations et au moins un dispositif d'entrée (6, 7) pour saisir des informations, le dispositif d'affichage (4, 5) pouvant reproduire des possibilités d'utilisation et/ou d'actionnement de fonctions et/ou d'applications, qui sont disponibles sur le terminal, comme des informations, **caractérisé en ce que** le terminal mobile (1) est configuré pour effectuer un procédé selon l'une des revendications 1 à 13.
